**Europäisches Patentamt**

**European Patent Office**

**Office européen des brevets**

(19)

(11) Veröffentlichungsnummer : **0 332 951 B1**

# EUROPÄISCHE PATENTSCHRIFT

(12)

(45) Veröffentlichungstag der Patentschrift :
25.03.92 Patentblatt 92/13

(51) Int. Cl.$^5$ : **C02F 1/46**

(21) Anmeldenummer : **89103739.2**

(22) Anmeldetag : **03.03.89**

(54) Verfahren und Vorrichtung zur elektrochemischen Entkeimung von Wässern.

(30) Priorität : **12.03.88 DE 3808393**

(43) Veröffentlichungstag der Anmeldung :
**20.09.89 Patentblatt 89/38**

(45) Bekanntmachung des Hinweises auf die
Patenterteilung :
**25.03.92 Patentblatt 92/13**

(84) Benannte Vertragsstaaten :
**AT BE CH DE ES FR GB GR IT LI LU NL SE**

(56) Entgegenhaltungen :
EP-A- 0 001 285
EP-A- 0 060 193
EP-A- 0 175 123
DE-A- 3 341 797
FR-A- 2 290 221
FR-A- 2 326 935

(73) Patentinhaber : **Vereinigte Elektrizitätswerke
Westfalen AG
Rheinlanddamm 24
W-4600 Dortmund 1 (DE)**

(72) Erfinder : **Rickert, Hans, Prof. Dr.
Wilhelm-Dresing-Strasse 37
W-4600 Dortmund 50 (DE)**
Erfinder : **Müller, Peter, Dipl.-Ing.
Kleine Schwerter Strasse 1
W-4600 Dortmund 41 (DE)**
Erfinder : **Holzäpfel, Günter, Dr.
Silberhecke 51
W-4600 Dortmund 30 (DE)**
Erfinder : **Bewer, Bernhard, Dipl.-Ing.
Grummetweg 17
W-4600 Dortmund 1 (DE)**

(74) Vertreter : **Patentanwälte Meinke und
Dabringhaus Dipl.-Ing. J. Meinke Dipl.-Ing. W.
Dabringhaus
Westenhellweg 67
W-4600 Dortmund 1 (DE)**

## Beschreibung

Die Erfindung richtet sich auf ein Verfahren und eine Vorrichtung zur elektrochemischen Entkeimung von Trink- und Brauchwässern mit einer Anoden-/Kathodenreaktion an den wasserbenetzten Anoden und Kathoden.

Elektrochemische Behandlungen von Wässern sind bekannt, so bereits aus der alten französischen Patentschrift 379 848, die die Sterilisation von Trinkwasser betrifft, oder aus der DE-A-21 31 878, die im wesentlichen die Desodorierung von Wasser zum Inhalt hat. Die Entkeimung von Wasser zeigt auch die DE-A-33 41 797 oder die FR-A-23 26 935. Im Vordergrund der Behandlung steht dabei die Verbesserung und Aufrechterhaltung der Trink- und Brauchwasserqualität. Aus der DE-A-28 38 502 ist eine Einrichtung bekannt, bei der zur Reinigung von Kathoden zwei Kathodenreihen vorgesehen sind, die wahlweise umgeschaltet werden können, wobei der Strom laufend fließt, dies insbesondere deswegen, um eine heftige Elektroflotation zu erreichen, was die vorliegende Erfindung vermeiden will, da eine Wasserstoffentwicklung wenn irgendmöglich gänzlich unterbunden werden soll.

In der heutigen Zeit werden gerade auch in Haushalten kleinere Mengen an Warmwasser bereitgehalten bei einer Temperatur, die grundsätzlich die Entwicklung von Mikroorganismen fördert. Wird daher über eine gewisse Zeit kein Brauchwasser entnommen, kann es nicht nur zu einer unangenehmen Geruchsbildung kommen, es besteht auch die Gefahr, daß gerade für den Menschen schädliche Bakterien in größeren Mengen entstehen.

Die zunehmende Verbreitung der sogenannten Legionärskrankheit wird u.a. auf schlechte Trinkwasserqualitäten zurückgeführt bzw. auf verseuchtes Bade- oder Duschwasser, d.h. gerade auf Wässer, die Temperaturen aufweisen, die für ein Bakterienwachstum besonders fördernd sind, also zwischen ca. 20°C und 40°C liegen.

Weiterhin ist in diesem Zusammenhang die Verbreitung von Bakterien zu erwähnen, die im Wasser vorhandenes Nitrat aufzehren und das bedenkliche, für den Menschen gesundheitsschädliche Nitrit ausscheiden.

Aufgabe der Erfindung ist die Schaffung einer Lösung, mit der mit vergleichsweise einfachen Mitteln die bekannte elektrochemische Behandlung von Wässern den heutigen Anforderungen gerecht wird und die sowohl für stationäre Anlagen, d.h. Brauchwasser-/Warmwasserspeicher und Zirkulations- und Zuleitungen geeignet ist wie auch für fließende Wässer beim Direktverbrauch.

Diese Aufgabe wird gemäß der Erfindung verfahrensgemäß durch die Merkmale des Anspruches 1 gelöst.

Die Erfindung macht sich die Erkenntnis zunutze, daß gerade mit einer potentiostatischen Regelung eine optimale Wasserbehandlung möglich ist, wobei der Strom den gewünschten Erfordernissen genau angepaßt und entsprechend aufrechterhalten werden kann, so daß die für die Entkeimung erforderlichen oxidativen bzw. reduktiven elektrochemischen Reaktionen an den Elektroden in optimaler Weise ablaufen können. Die periodische Beaufschlagung führt darüber hinaus zu einer Verstärkung der Behandlung, die für eine besonders hohe Effektivität des eingesetzten Verfahrens sorgt.

Dabei wird das Potential der Kathode mittels einer Bezugselektrode gemessen und mit Hilfe des Potentiostaten auf einen konstanten optimalen Wert gehalten, wobei das Vorsehen einer Bezugselektrode allerdings für sich gesehen gewisse Nachteile mit sich bringt. Eine solche Bezugselektrode stellt im Gesamtsystem ein besonders empfindliches Bauteil mit geringer Lebensdauer dar und mit der größten Störanfälligkeit. Darüber hinaus wird aufgrund des Stromflusses und endlichen Abstandes der Bezugselektrode von der Kathode ein unerwünschter Anteil mitgemessen, nämlich die sogenannte Widerstandspolarisation, was zur Verfälschung der Potentialmessung und -regelung führen kann.

Derartige Nachteile lassen sich erfindungsgemäß dadurch vermeiden, daß bei Einsatz eines Abschaltpotentiostaten bei abgeschalteten Strom das vorhandene Potential ($E_{ist}$) direkt zwischen der in dieser Phase als Bezugselektrode eingesetzten Inertanode und der Kathode gemessen und mit dem am Potentiostaten eingestellten, optimalen Soll-Potential ($E_{soll}$) verglichen und die Differenz ($E_{ist} - E_{soll}$) direkt als Regelgröße für den zur Entkeimung benötigten Strom herangezogen wird.

Unabhängig davon, ob ein Abschaltpotentiostat eingesetzt wird oder aber ein normaler Potentiostat mit Bezugselektrode, sieht die Erfindung vor, daß das Potential der Kathode so eingeregelt wird, daß gerade kein Wasserstoff entsteht, womit sich mit einfachen aber sehr zweckmäßigen Mitteln die Entstehung von Knallgas im behandelten System vermeiden läßt.

Aus der DE-A-28 46 452 ist eine Verfahrensweise bekannt, bei der man versucht, mittels getakteter Gleichspannung eine anodische Oxidation zu erreichen. Es hat sich gezeigt, daß diese Verfahrensweise nicht geeignet ist, Wasserstoffentwicklung zu verhindern, im Gegenteil, sie wird dort wohl in Kauf genommen. Dies liegt bei der vorliegenden Erfindung anders, da hier ein konstantes Potential und kein konstanter Strom aufrechterhalten werden soll, um, wie eingangs bereits ausgeführt, eine Wasserstoffentwicklung zu verhindern.

Eine Ausgestaltung in der periodischen Abschaltung liegt erfindungsgemäß darin, daß die Phase des Fließens des Entkeimungsstromes gleich oder größer als die Abschaltphase eingestellt wird.

Eine Ausgestaltung der Erfindung besteht bei Einsatz einer Platin-Titananode und einer Eisen- bzw. Stahlkathode darin, daß das Soll-Potential ($E_{soll}$) im Bereich von 2,7 V eingestellt wird. Bei diesen Gegebenheiten ist dies der Bereich, in dem die Wasserstoffentwicklung vermieden wird, wobei hier ausdrücklich darauf hingewiesen sei, daß bei Einsatz anderer Materialien für Kathode und Anode diese Grenzbereiche geringfügig unterschiedlich sind. Niedrigere Potentialbereiche ergeben keine optimale Wirkung.

Die erfindungsgemäße Aufgabe wird mit einer Vorrichtung zur Durchführung des Verfahrens mit einer Anode und einer Kathode durch die Merkmale des Anspruches 7 gelöst.

Zweckmäßig ist es dabei, wenn wenigstens eine vom zu behandelnden Wasser durchströmte Glitterelektrode als Inertanode vorgesehen ist.

Eine besondere Ausgestaltung der Vorrichtung besteht darin, daß zur Trennung des zu behandelnden Wassers in wenigstens zwei Ströme eine mit einem Diaphragma versehene elektrochemische Zelle vorgesehen ist, wobei das Wasser dort anodisch bzw. kathodisch behandelt wird, und eine weitere, durch ein Diaphragma getrennte elektrochemische Zelle vorgesehen ist, wobei dann dort die Teilströme einer kathodischen bzw. anodischen Behandlung unterworfen werden. Natürlich können auch eine Mehrzahl derartiger Zellen hintereinander vorgesehen sein. Die Aufteilung der zu behandelnden Wasserströme und die nachfolgende kathodische und anodische Behandlung bzw. umgekehrt bietet behandlungstechnische und regeltechnische Vorteile, da kleinere Strömungsquerschnitte berücksichtigt werden müssen, d.h. zwangsläufig kleinere Volumenströme.

Für einen speziellen Anwendungsbereich, ohne daß die Erfindung hierauf beschränkt wäre, ist darüber hinaus vorgesehen, daß die Vorrichtung als Duschkopf oder Auslaufarmatur für entsprechende sanitäre Einrichtungen ausgebildet ist.

Die Erfindung ist nachstehend anhand der Zeichnung beispielsweise näher erläutert. Diese zeigt in

Fig. 1 ein Prinzipbild eines Vorratsbehälters in einfacher Ausführung, in

Fig. 2 einen ähnlichen Vorratsbehälter in etwas anderer Ausführung einer der Elektroden, in

Fig. 3 einen Durchlaufbehälter mit durchlässiger Kathode, in

Fig. 4 einen Durchlaufbehälter mit durch ein Diaphragma getrennten Strömungsräumen, in

Fig. 5 hintereinandergeschaltete Einrichtungen gemäß Fig. 4 sowie in

Fig. 6 eine als Duschkopf ausgebildete Vorrichtung.

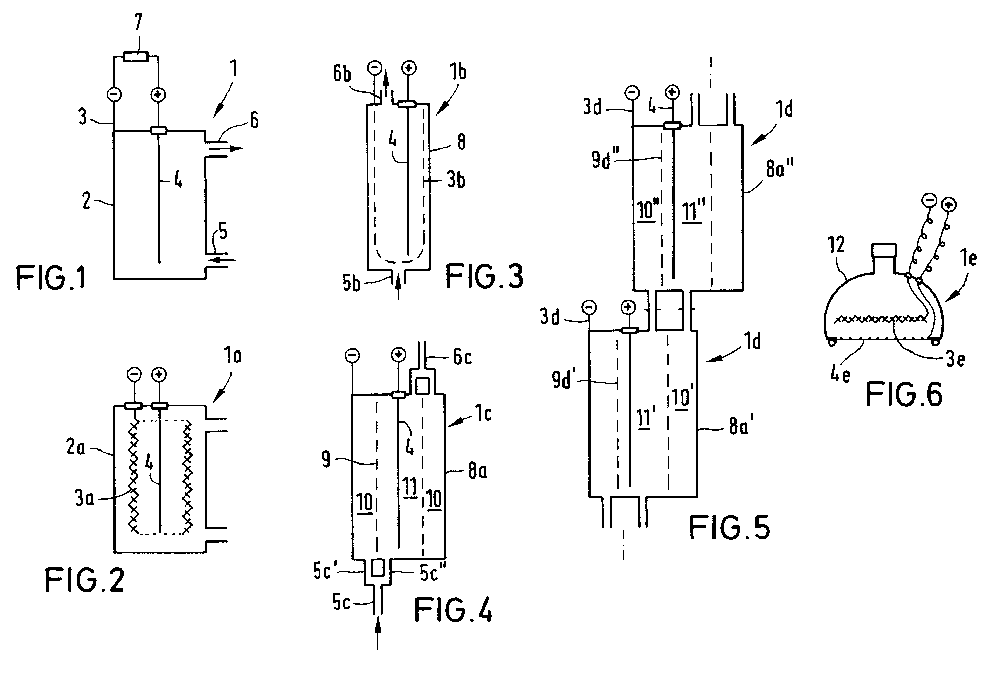

Die in Fig. 1 dargestellte und allgemein mit 1 bezeichnete Vorrichtung ist als Vorratsbehälter 2 ausgebildet, dessen Wand wenigstens bereichsweise als Kathode aus elektrisch leitendem Material ausgebildet ist. Dies ist mit einem "-" dargestellt und mit 3 bezeichnet. Die in der Mitte isoliert eingeführte Anode ist mit dem Bezugszeichen 4 bezeichnet und trägt das "+"-Zeichen. Der Wasserzufluß trägt das Bezugszeichen 5, der Wasserausfluß das Bezugszeichen 6. Bei einem derartigen Behälter kann es sich beispielsweise um einen Brauchwassertank, gefüllt mit Warmwasser, handeln.

Zwischen Anode und Kathode, dies ist nur in Fig. 1 dargestellt, befindet sich erfindungsgemäß eine Potentialsteuerung mit einem sogenannten Potentiostaten mit einer entsprechenden Meß- und Regeleinrichtung, dies ist mit einem Kästchen mit dem Bezugszeichen 7 wiedergegeben.

In Fig. 2 ist grundsätzlich der gleiche Aufbau vorgesehen. Die dortige Vorrichtung 1a weist dort einen elektrisch nicht leitenden Behälter 2a auf, die Kathode 3a ist aus einem Gittermaterial, welches durchströmbar ausgebildet ist, und umgibt etwa zylinderförmig die im Inneren befindliche Anode 4. Die Gitterelektrode 3a kann aber auch jede andere Gestaltung aufweisen.

In den Fig. 3 und 4 sind keine Vorratsbehälter 2 bzw. 2a wiedergegeben, sondern Durchflußbehälter 8 bzw. 8a im Falle der Fig. 4.

In Fig. 3 ist die Kathode 3b als poröse, von dem Wasser durchströmbare Kathode ausgebildet. Die Anode 4 ist wiederum in üblicher Weise gestaltet. Hier ist die Wirkungsweise so, daß durch den unteren Einlaufstutzen 5b das Wasser einströmt, die poröse Kathode 3b durchsetzt und oben am Auslaßstutzen 6b die allgemein mit 1b bezeichnete Vorrichtung verläßt.

Eine grundsätzlich anders gestaltete Art der Vorrichtung 1c zeigt die Fig. 4. Hier ist das Gehäuse 8a wiederum elektrisch leitend als beispielsweise Kathode ausgebildet. Im Inneren wird die Anode 4 von einem Diaphragma 9 in beispielsweise Zylinderform umgeben.

Der Zuflußstutzen 5c teilt sich in zwei Stutzenarme 5c′ und 5c″ auf, derart, daß der eine Stutzen 5c′ einen äußeren Ringraum 10 im Inneren der Vorrichtung 1c beaufschlage, während der andere Zuführstutzen 5c″ den zentrischen Innenraum, mit 11 bezeichnet, beaufschlagt.

Bei dem Abschlußstutzen 6c ist die Gestaltung umgekehrt, derart, daß der äußere Ringraum 10 und der Innenraum 11 wiederum zusammengefaßt sind.

Die Wirkungsweise ist dabei derart, daß ein Teil des durch strömenden Wassers stärker der Kathodenreaktion unterworfen ist, während der andere Teil stärker der anodischen Reaktion unterworfen ist, die derart behandelten Wässeranteile werden im Abschlußstutzen 6c wieder zusammengeführt.

Eine besonders vorteilhafte Gestaltung zeigt die Fig. 5. Hier ist an ein Gehäuse 8a' ein weiteres, identisch gestaltetes Gehäuse 8a" angeschlossen, wobei der zentrische Anodenraum 11' mit dem äußeren Kathodenringraum 10" verbunden ist, während der untere kathodische Ringraum 10' mit dem oberen zentrischen Anodenraum 11" unmittelbar verbunden ist.

Diese Tandemkupplung der Vorrichtung 1d macht es möglich, den stärker kathodisch behandelten Wasseranteil in der nächstfolgenden Stufe dem Anodenraum zuzuführen und das stärker anodisch behandelte Wasser dem folgenden kathodischen Ringraum.

Natürlich können eine Mehrzahl von derartigen Vorrichtungen 1d hintereinandergeschaltet sein, was den besonderen Vorteil hat, daß diese Durchflußgehäuse 8a vergleichsweise klein gehalten werden können mit hoher Leistungsfähigkeit für die elektrochemische Entkeimung.

Schließlich zeigt Fig. 6 noch eine allgemein mit 1e bezeichnete Vorrichtung, die als Duschkopf 12 gestaltet ist, mit einem elektrisch leitenden Siebblech 4e als Anode und einer gitterförmig gestalteten Kathode 3e.

Der wesentliche Gedanke, der bei dieser Ausgestaltung eine Rolle spielt, besteht darin, daß bei der Warmwasserbereitung unmittelbar auf die Entstehung von Keimen gemäß der Erfindung eingegriffen werden kann. Wird nur, wie beim Duschen üblich, zeitweise Warmwasser entnommen, besteht die Gefahr, daß zwischen Warmwasserherstellung und Ende des Warmwasserstranges bis zum Duschkopf eine Atmosphäre gebildet wird, die für die Entstehung und Vermehrung unerwünschter Keime ideale Voraussetzungen schafft. Die Umgebung ist feucht und in der Regel warm. Um auch hier eingreifen zu können, sieht die Erfindung einen entsprechend gestalteten Duschkopf vor.

Natürlich sind die beschriebenen Ausführungsbeispiele noch in vielfacher Hinsicht abzuändern, ohne den Grundgedanken zu verlassen. So ist die Erfindung nicht auf Art und Gestaltung von Anode und Kathode beschränkt, die Gestaltung kann auch in umgekehrter Weise wie in den Figuren dargestellt erfolgen. Dies hängt sehr stark von den einzelnen Einsatzmöglichkeiten von Durchflußmengen, von räumlichen Gestaltungsmöglichkeiten u. dgl. mehr ab, d.h. Anode und Kathode können getauscht werden u. dgl. mehr.

## Patentansprüche

1. Verfahren zur elektrochemischen Entkeimung von Trink- und Brauchwässern mit einer Anoden-/Kathodenreaktion an den wasserbenetzten Anoden und Kathoden, dadurch gekennzeichnet, daß zwischen einer inerten Anode und der Kathode ein über einen Abschaltpotentiostaten geregelter Strom angelegt wird, der periodisch ab- und wieder angeschaltet wird, wobei bei abgeschaltetem Strom das vorhandene Potential ($E_{ist}$) direkt zwischen der in dieser Phase als Bezugselektrode eingesetzten Inertanode und der Kathode gemessen und mit dem am Potentiostaten eingestellten, optimalen Soll-Potential ($E_{soll}$) verglichen und die Differenz ($E_{ist}$ - $E_{soll}$) direkt als Regelgröße für den zur Entkeimung benötigten Strom herangezogen wird.

2. Verfahren nach Anspruch 1 unter Einsatz einer Platin-Titananode und einer Eisen- bzw. Stahlkathode, dadurch gekennzeichnet, daß das Soll-Potential ($E_{soll}$) im Bereich von 2,7 V eingestellt wird.

3. Verfahren nach Anspruch 1 oder 2, dadurch gekennzeichnet, daß das Potential der Kathode so eingeregelt wird, daß gerade kein Wasserstoff entsteht.

4. Verfahren nach einem der vorangehenden Ansprüche, dadurch gekennzeichnet, daß die Phase des Fließens des Entkeimungsstromes gleich oder größer als die Abschaltphase eingestellt wird.

5. Verfahren nach einem der vorangehenden Ansprüche, dadurch gekennzeichnet, daß das Potential $E_{ist}$ nach einem zeitlichen Intervall als Wartephase nach dem Anschalten gemessen und als Regelgröße in der Regelphase für den in der Einschaltphase fließenden Entkeimungsstrom herangezogen wird.

6. Verfahren nach einem der vorangehenden Ansprüche, dadurch gekennzeichnet, daß die elektrochemische Behandlung des Wassers in einer von einem Diaphragma freien elektrochemischen Zelle mit metallischer Zellwand durchgeführt wird, wobei die Zellwand gleichzeitig als Kathode eingesetzt wird.

7. Vorrichtung zur elektrochemischen Entkeimung von Trink- und Brauchwässern mit einer Anode und einer Kathode zur Durchführung des Verfahrens nach einem der vorangehenden Ansprüche, dadurch gekennzeichnet, daß sie als Vorrats- bzw. Durchflußbehälter (2,8) für das zu behandelnde Wasser ausgebildet ist mit einem Wasserzufluß (5) und einem Wasserabfluß (6) sowie mit einem den angelegten Strom periodisch abschaltenden und wieder anschaltenden Potentiostaten (7) mit Potentialmessung, wobei bei abgeschaltetem Strom das vorhandene Potential ($E_{ist}$) direkt zwischen der in dieser Phase als Bezugselektrode eingesetzten Inertanode und der Kathode gemessen und mit dem am Potentiostaten eingestellten, optimalen Soll-Potential ($E_{soll}$) verglichen und die Differenz ($E_{ist}$ - $E_{soll}$) direkt als Regelgröße für den zur Entkeimung benötigten Strom herangezogen wird.

8. Vorrichtung nach Anspruch 7, gekennzeichnet durch wenigstens eine vom zu behandelnden Wasser durchströmte Gitterelektrode (3a,3b) als Inertanode.

9. Vorrichtung nach einem der Ansprüche 7 oder 8, dadurch gekennzeichnet, daß zur Trennung des zu behandelnden Wassers in wenigstens zwei Ströme eine mit einem Diaphragma (9d′) versehene elektrochemische Zelle (8a′) vorgesehen ist, wobei das Wasser dort anodisch bzw. kathodisch behandelt wird, und eine weitere, durch ein Diaphragma (9d″) getrennte elektrochemische Zelle (8a″) vorgesehen ist, wobei dann dort die Teilströme einer kathodischen bzw. anodischen Behandlung unterworfen werden.

10. Vorrichtung nach Anspruch 7 oder einem der folgenden, dadurch gekennzeichnet, daß sie als Duschkopf oder Auslaufarmatur (12) für entsprechende sanitäre Einrichtungen ausgebildet ist.

## Revendications

1. Procédé pour la désinfection électrochimique d'eaux potables et sanitaires, avec une réaction anodique/cathodique se produisant sur les anodes et les cathodes baignant dans l'eau, caractérisé par le fait qu'un courant, périodiquement déconnecté, puis réenclenché, régulé par l'intermédiaire d'un potentiostat de déconnexion, est appliqué entre une anode inerte et la cathode, et, lorsque le courant est déconnecte, le potentiel effectif ($E_{ist}$) est directement mesuré entre la cathode et l'anode inerte faisant fonction d'électrode de référence lors de cette phase, puis est comparé au potentiel optimal de consigne ($E_{soll}$) réglé sur le potentiostat, et la différence ($E_{ist}$ - $E_{soll}$) est directement récupérée en tant que grandeur régulatrice du courant nécessaire à la désinfection.

2. Procédé selon la revendication 1, recourant à l'utilisation d'une anode en platine-titane et d'une cathode consistant respectivement en du fer ou en de l'acier, caractérisé par le fait que le potentiel de consigne ($E_{soll}$) est réglé dans la plage de 2,7 V.

3. Procédé selon la revendication 1 ou 2, caractérisé par le fait que le potentiel de la cathode est régulé de telle sorte que de l'hydrogène ne soit précisément pas dégagé.

4. Procédé selon l'une des revendications précédentes, caractérisé par le fait que la phase de circulation du courant de désinfection est réglée pour être égale ou supérieure à la phase de déconnexion.

5. Procédé selon l'une des revendications précédentes, caractérisé par le fait que le potentiel $E_{ist}$ est mesuré après un intervalle de temps, en tant que phase d'attente succédant à la mise en marche, puis est récupéré, lors de la phase de régulation, en tant que grandeur régulatrice du courant de désinfection circulant lors de la phase d'enclenchement.

6. Procédé selon l'une des revendications précédentes, caractérisé par le fait que le traitement électrochimique de l'eau est effectué dans une cellule électrochimique dépourvue de diaphragme et munie d'une paroi cellulaire métallique, la paroi cellulaire étant simultanément employée en tant que cathode.

7. Dispositif pour la désinfection électrochimique d'eaux potables et sanitaires à l'aide d'une anode et d'une cathode, pour la mise en oeuvre du procédé selon l'une des revendications précédentes, caractérisé par le fait qu'il est respectivement réalisé sous la forme d'un réceptacle (2, 8) de réserve ou à circulation traversante, destiné à l'eau devant être traitée, et comprenant une arrivée d'eau (5) et une sortie d'eau (6), ainsi qu'un potentiostat (7) à mesurage de potentiel, qui déclenche et réenclenche périodiquement le courant appliqué ; dispositif dans lequel, lorsque le courant est déconnecté, le potentiel effectif ($E_{ist}$) est directement mesuré entre la cathode et l'anode inerte faisant fonction d'électrode de référence lors de cette phase, puis est comparé au potentiel optimal de consigne ($E_{soll}$) réglé sur le potentiostat, et la différence ($E_{ist}$ - $E_{soll}$) est directement récupérée en tant que grandeur régulatrice du courant nécessaire à la désinfection.

8. Dispositif selon la revendication 7, caractérisé par au moins une électrode (3a, 3b) du type grille, parcourue par l'eau devant être traitée, et faisant fonction d'anode inerte.

9. Dispositif selon l'une des revendications 7 ou 8, caractérisé par le fait qu'une cellule électrochimique (8a′), pourvue d'un diaphragme (9d′), est prévue pour scinder l'eau devant être traitée en au moins deux flux, cellule dans laquelle l'eau est soumise à un traitement respectivement anodique ou cathodique ; et il est prévu une autre cellule électrochimique (8a″), séparée par l'intermédiaire d'un diaphragme (9d″), et dans laquelle les flux partiels sont ensuite soumis à un traitement respectivement cathodique ou anodique.

10. Dispositif selon la revendication 7 ou l'une des suivantes, caractérisé par le fait qu'il est conçu comme une pomme de douche ou comme une robinetterie distributrice (12) pour installations sanitaires correspondantes.

## Claims

1. A process for the electrochemical sterilisation of drinking water and water for industrial use with an anode/cathode reaction at the water-wetted anodes and cathodes characterised in that applied between an inert anode and the cathode is a current which is regulated by way of a cut-off potentiostat and which is periodically switched off and switched on again, wherein when the current is switched off the existing potential ($E_{ist}$) is measured directly between the inert anode which is used as a reference electrode in that phase, and the cathode, and compared to the optimum reference potential ($E_{soll}$) which is set at the potentiostat, and the difference ($E_{ist}-E_{soll}$) is used directly as a regulating parameter for the current required for the sterilisation effect.

2. A process according to claim 1 using a platinum titanium anode and an iron or steel cathode characterised in that the reference potential ($E_{soll}$) is set in the region of 2.7 V.

3. A process according to claim 1 or claim 2 characterised in that the potential of the cathode is so regulated that there is just no hydrogen produced.

4. A process according to one of the preceding claims characterised in that the phase of flow of the sterilisation current is set to be equal to or greater than the switched-off phase.

5. A process according to one of the preceding claims characterised in that the potential $E_{ist}$ is measured after a time interval as a waiting phase after the switching-on step and is used as a regulating parameter in the regulating phase for the sterilisation current which flows in the switched-on phase.

6. A process according to one of the preceding claims characterised in that electrochemical treatment of the water is carried out in an electrochemical cell which is free of a diaphragm, with a metal cell wall, wherein the cell wall is used at the same time as a cathode.

7. Apparatus for the electrochemical sterilisation of drinking water and water for industrial use having an anode and a cathode for carrying out the process according to one of the preceding claims characterised in that it is in the form of a storage or through-flow container (2, 8) for the water to be treated, with a water feed flow (5) and a water discharge flow (6) and a potentiostat (7) with potential measurement, which periodically switches off the applied current and switches it on again, wherein when the current is switched off the existing potential ($E_{ist}$) is measured directly between the inert anode which is used as a reference electrode in that phase, and the cathode, and compared to the optimum reference potential ($E_{soll}$) which is set at the potentiostat, and the difference ($E_{ist}-E_{soll}$) is used directly as a regulating parameter for the current required for the sterilisation effect.

8. Apparatus according to claim 7 characterised by at least one lattice electrode (3a, 3b) through which the water to be treated flows, as an inert anode.

9. Apparatus according to one of claims 7 and 8 characterised in that there is provided an electrochemical cell (8a') which has a diaphragm (9d') for separation of the water to be treated into at least two flows, wherein the water is anodically or cathodically treated there, and there is provided a further electrochemical cell (8a'') which is separated by a diaphragm (9d''), wherein the partial flows are then there subjected to a cathodic or an anodic treatment respectively.

10. Apparatus according to claim 7 or one of the following claims characterised in that it is in the form of a shower head or discharge fitting (12) for corresponding sanitary equipment.

FIG.6

FIG.5

FIG.3

FIG.4

FIG.1

FIG.2